# EUROPEAN PATENT SPECIFICATION

(11) **EP 2 575 448 B1**
(45) Date of publication and mention of the grant of the patent: **17.10.2018**
(21) Application number: 11792821.8
(22) Date of filing: 11.04.2011
(51) Int. Cl.: A01N 25/28, A01N 33/18, A01P 13/00, B01J 13/16

(54) **MICROCAPSULE SUSPENSIONS INCLUDING HIGH LEVELS OF AGRICULTURALLY ACTIVE INGREDIENTS**
MIKROKAPSELSUSPENSIONEN MIT HOHEN ANTEILEN LANDWIRTSCHAFTLICHER WIRKSTOFFE
SUSPENSIONS DE MICROCAPSULES COMPRENANT DES NIVEAUX ÉLEVÉS D'INGRÉDIENTS ACTIFS SUR LE PLAN AGRICOLE

(30) Priority: 07.06.2010 US 352084 P
(43) Date of publication of application: 10.04.2013
(73) Proprietor: Dow AgroSciences LLC, Indianapolis, IN 46268 (US)
(72) Inventor: XU, Wen, Cary, NC 27519 (US); TANK, Holger, Zionsville, IN 46077 (US)
(74) Representative: f & e patent
(86) International application number: PCT/US2011/031925
(87) International publication number: WO 2011/156048

(56) References cited:
- WO-A1-95/13698
- US-A- 5 596 051
- US-A1- 2006 122 066
- US-A1- 2009 269 382

## Description

### FILED OF THE INVENTION

The present invention relates to stable, microcapsule suspensions that include high levels of trifluralin.

WO 95/13698 A1 discloses microcapsules containing a suspension of a solid, biologically active compound in an organic, water-immiscible liquid and processes for their preparation. However, said document does not disclose microcapsules comprising a polymeric shell which encapsulates both a lipophilic polymer and an agriculturally active ingredient.

### BACKGROUND AND SUMMARY

Oil in water microcapsule suspensions can be used to effectively deliver various agriculturally active ingredients (AIs) such as herbicides, insecticides or fungicides to the surfaces of plants or areas adjacent to plants that harbor or may harbor certain plant pathogens. In general, a high level of AI in the microcapsule makes for a formulation that is easier to store, transport and apply. At the same time, many AI's are solid at room temperature and highly insoluble in water. Accordingly, water insoluble AI's must be dissolved in non-aqueous solvents and often times in large volumes of such solvents. The desire for microcapsules with high AI content and the relative insolubility of many AIs necessitates using large volumes of non-aqueous solvents, which in turn contributes to the cost of forming these types of microcapsules. Some aspects of the invention disclosed herein address the need for microcapsules with high content of trifluralin that can be formed using relatively low solvent volumes.

Some aspects of the invention include microcapsules, comprising: a lipophilic polymer, selected from the group consisting of polymeric acrylates a lipophilic agriculturally active ingredient, which includes trifluralin, at least one lipophilic solvent that dissolves the active ingredient, and a polymeric shell wherein the polymeric shell encapsulates said lipophilic polymer and the agriculturally active ingredient. In some of these microcapsules the polymeric shell includes polyurea.

In some embodiments, the amount of agriculturally active ingredient in the microcapsule includes between 10 to 55, weight percent based on the total weight of the oil-in-water emulsion.

In some embodiments, the compounds used to form the polymeric shell includes polymethylene polyphenylisocyanate. In some embodiments the compound used to form the polymeric shell includes ethylene diamine. In some embodiments, the compounds used to form the polymeric shell include at least one compound selected from the group consisting of: diisocyanates or polyisocyanates.

Some aspects of the invention include at least one method of controlling at least one plant pathogen, comprising the steps of: providing a microcapsule suspension formed in accordance with inventive materials and methods disclosed herein, and contacting the microcapsule suspension with a surface adjacent to a plant pathogen.

Still other aspects of the invention include methods of synthesizing a microcapsule, comprising the steps of: creating a lipophilic phase, said lipophilic phase including a lipophilic polymer selected from the group consisting of polymeric acrylates, at least one agriculturally active ingredient which includes trifluralin, at least one lipophilic solvent and a lipophilic shell forming material; emulsifying said lipophilic phase in the presence of water to form an oil-in-water emulsion; and forming a microcapsule suspension via an interfacial polycondensation reaction including the step of adding a water soluble shell forming material to the oil-in-water emulsion. In some embodiments, the lipophilic phase is created using a high shear mixer. In some embodiments, the emulsifying step includes in-line blending of said lipophilic phase and water.

In some embodiments, the lipophilic shell forming material is polymethylene polyphenylisocyanate and, in some embodiments, the water soluble shell forming material include diamines, polyamines, water soluble diols and water soluble polyols. In some embodiments the water soluble shell forming material is ethylene diamine. In some embodiments the lipophilic shell forming material is selected from the group consisting of: diisocyanates or polyisocyanates.

Still other aspects of the invention include at least one method of formulating an agriculturally active ingredient, comprising the steps of: creating a lipophilic phase, said lipophilic phase including a lipophilic monomer selected from the group consisting of: methyl acrylate, ethyl acrylate, or butyl acrylate, a lipophilic initiator, a lipophilic shell forming material, an agriculturally active ingredient which includes trifluralin and at least one lipophilic solvent; emulsifying said lipophilic phase in the presence of water to form an oil-in-water emulsion; forming a microcapsule suspension including the step of adding a water soluble shell forming material to the oil-in-water emulsion; wherein the water soluble shell forming material reacts with the lipophilic shell forming material via an interfacial polycondensation reaction to form microcapsules; and polymerizing the lipophilic polymer selected from the group consisting of polymeric acrylates. In some embodiments, the oil soluble initiator is 2, 2-azobis (2,4-dimethylvaleronitrile). Some embodiments include using a high shear mixer to create the lipophilic phase. In some embodiments, forming the microcapsule includes an emulsifying step that uses an in-line blending of said lipophilic phase and water. Some embodiments include the step of controlling the temperature of the lipophilic phase such that the temperature of the lipophilic phase and the temperature of emulsion is at least 5°C to 10°C below the initiator activation temperature of the lipophilic monomer; and raising the temperature after the microcapsule forming step to at least the initiation activation temperature of the lipophilic monomer. In some embodiments, the lipophilic shell forming material is polymethylene polyphenylisocyanate. In some embodiments, the water soluble shell forming material include diamines, polyamines, water soluble diols and water soluble polyols. In some embodiments, the water soluble shell forming material is ethylene diamine. In some embodiments, the lipophilic shell forming material is selected from the group consisting of: diisocyanates or polyisocyanates.

Still other embodiments of forming microcapsule suspensions include the steps of controlling the temperature of the lipophilic phase and aqueous phase mixing step such that the temperature of the mixture is at least 5°C to 10°C below the first polymer monomer's initiator activation temperature at least until the second polymeric shell forming material undergoes an interfacial polymerization reaction; and raising the temperature of the mixture to at least the first polymer monomer's initiator activation temperature and allowing the first polymer to form a polymer matrix within microcapsules that include at least a portion of the AI. In some embodiments the monomer polymerizes to form a substantially water insoluble polymer that is compatible with the oil phase. In some embodiments, the polymeric shell forming material includes, but is not limited to, compounds such as diisocyanates, polyisocyanates, diacid chlorides, poly chlorides, sulfonyl chlorides, and chloroformates, and the like. In some embodiments, the oil soluble initiator in the mixture is 2, 2-azobis (2,4-dimethylvaleronitrile). In some embodiments, the second polymeric shell forming material include diamines, polyamines, water soluble diols and water soluble polyols.

In some embodiments, the amount of agriculturally active ingredient in the microcapsule includes between 10 to 55, weight percent based on the total weight of the oil-in-water emulsion. In some embodiments, the agriculturally active compound in the microcapsule suspension has a melting point of 95°C or less.

### DETAILED DESCRIPTION

Many AIs are solid at room temperature and must be dissolved in solvents before they can be incorporated into microcapsules. In order to prevent the AI from crystallizing, it is often necessary to dissolve the AI in a large volume of solvent. To the extent that the solvent that must be used is a volatile organic compound, the need for high solvent volumes leads to problems with regulatory compliance that may limit the amount of volatile organic compounds that may be released into the environment at a given time. At the same time, using a large volume of solvent dilutes the AI available to form a specific microcapsule thereby reducing the amount of AI in each microcapsule.
In the context of the present invention, AI corresponds to trifluralin.

Some aspects of the invention disclosed herein employ an oil-in water emulsion comprising a polymer modified discontinuous phase in which AI is either directly dissolved in a suitable polymer building component or via a mini-emulsion polymerization process. The introduction of suitable polymers into the oil phase allows for better regulation of the kinetics of AI crystallization. The proper selection of suitable polymers can effectively slow down the AI crystallization process without having to result to the use of high solvent volumes to effectively delay AI crystallization before microcapsule formation. One benefit of this approach is a reduction in the amount of volatile organic solvent that must be used in the process. Still another advantage is the opportunity to encapsulate the AI under high AI concentrations which results in a final formulation that has an AI load higher than that which is commonly arrived at using more conventional techniques.

In theory, if the AI and polymer components are properly matched it is possible to produce an encapsulated AI in the absence of any AI solvent. Even if it is impossible to completely eliminate the need for a solvent, apart from the polymer, that dissolves the AI, it is very likely that the amount of solvent can be reduced along with the attendant problems of using additional solvent.

In some embodiments, the lipophilic phase of the microcapsule suspension is prepared via a conventional polymer dissolving process. For example, at least one suitable polymer is first dissolved in a solvent, applying heat if necessary to affect salvation. Next, the polymer is mixed with other ingredients such as molten active AI(s), and polymer shell forming materials such as polymethylene polyphenylisocyanate, for example, Dow PAPI 27®.

In still other embodiments, the lipophilic phase of the microcapsule suspension is prepared via a mini-emulsion polymerization process. Briefly, at least one molten or liquid AI is mixed with at least one polymer or monomer, an optional solvent and, in some embodiments, at least one polymeric shell forming material. At this stage, an oil soluble initiator may be directly dissolved into the lipophilic phase at a temperature below the monomers' activation temperature.

In some embodiments, the aqueous phase is prepared by dissolving at least one surfactant and other water soluble components, such as thickeners, into water. Next, after two separate homogenous phases are formed, the oil (lipophilic) phase is added to the aqueous phase. An emulsion is formed by use of a high shear mixer, for example, a Silverson mixer, for as long as necessary to form an emulsion. In some tests, 1 minute of high shear mixing, at 4,000 revolutions per minute (rpm) was sufficient to create a suitable oil-in-water emulsion. In some embodiments, the oil in water emulsion is formed via a direct in-line blending of the oil and aqueous phases at the appropriate ratios of oil and water phases. The exact mixing times, blending rates, mixing rates and other conditions may vary from composition to composition and on the average mean capsule size that the process is intended to produce. In general, longer mixing times and more vigorous mixing conditions, e.g. higher rpm, favor the formation of smaller microcapsules.

In some embodiments, the components necessary to effect an interfacial polymerization reaction are mixed with the suitably sized oil-in-water emulsion. The conditions of this mixture are controlled so as to promote the formation of a uniform interfacial polymerization. For example, a suitable sized oil-in-water emulsion may be mixed with a second polymeric shell forming material, such as ethylene diamine (EDA). In this example, the EDA is slowly added to the existing emulsion, optionally with cooling to prevent or minimize any premature polymerization reactions. This step is carefully controlled to insure a uniform interfacial polymerization reaction at the emulsion's water / oil interface. This step may be accomplished using a conventional low speed mixer or agitator. In some embodiments, the second polymeric shell forming material is added to the emulsion mixture for 30 additional minutes. The length of time and degree of mixing required to accomplish this step may vary based on the components used and the characteristics of the emulsion. In some embodiments, the mixing of second polymeric shell forming material and oil-in-water emulsion is accomplished not by agitation, but rather by continuous inline blending of the desired ratio of the second polymeric shell forming material and the preexisting emulsion.

In some embodiments, the temperature of the emulsion is carefully controlled during the interfacial polymerization reaction. The temperature may be held, for example, in the range of 5°C to 10°C below the initiator activation temperature of the monomer in order to avoid, or at least minimize, the degree to which the microcapsule forms before the interfacial polymerization reaction is substantially completed. After the interfacial polymerization reaction is substantially completed, the reaction mixture may be heated (or at least allowed to rise) to the desired monomer initiator activation temperature. For example, if the monomer initiator is Dupont Vazo 52® (2,2-axobis (2,4-dimethylvaleronitrile), the mixture may be held with mixing for two hours at a temperature of 70°C.

Ideally, a polymer monomer, or mixture of polymer monomers, is selected such that the monomer(s) has a very low solubility in water and is compatible with the AI and any optional solvent added to the oil phase. An ideal forming polymer is hydrophobic and substantially insoluble in aqueous solution. The actual selection of the polymer depends on the composition of the mixture and the properties of the microcapsule that one intends to form. Accordingly, the components of the mixture can be selected to form microcapsules that exhibit certain advantageous properties once they are used including, for example, good film forming properties, bioavailability, residuality, and the like. Depending on the desired properties and other factors such as specific AIs, either homo- or co-polymers can be used. Polymers suitable for the practice of the invention include, but are not limited to, polymeric acrylates, polyvinyl acetate homopolymers and copolymers and styrene butadiene latex. Depending upon the application the concentration of the polymer monomer or mixture of monomers may range from 5% to 60%.

The oil phase of the oil-in-water emulsion of the present invention utilizes either the AI which is in the form of an oil or, alternatively, the AI dissolved or mixed in an oil to form the oily globules. By definition an oil is a liquid that is not miscible with water. Any oil which is compatible with the agriculturally active compound may be used in the oil-in-water emulsions of the present invention. The term 'compatible' means that the oil will dissolve or mix uniformly with the agriculturally active compound and allow for the formation of the oily globules of the oil-in-water emulsion of the present invention. Exemplary oils include, but are not limited to, short-chain fatty acid triglycerides, silicone oils, petroleum fractions or hydrocarbons such as heavy aromatic naphtha solvents, light aromatic naphtha solvents, hydrotreated light petroleum distillates, paraffinic solvents, mineral oil, alkylbenzenes, N,N-dimethyl capramide and N,N-dimethyl caprylamide or mixtures thereof, paraffinic oils, and the like; vegetable oils such as soy oil, rape seed oil, coconut oil, cotton seed oil, palm oil, soybean oil, and alkylated vegetable oils and alkyl esters of fatty acids such as methyloleate.

Exemplary pesticides which can be utilized in the microcapsule suspension of the present invention include, but are not limited to, benzofuranyl methylcarbamate insecticides such as benfuracarb, and carbosulfan; oxime carbamate insecticides such as aldicarb; fumigant insecticides such as chloropicrin, 1,3-dichloropropene and methyl bromide; juvenile hormone mimics such as fenoxycarb; organophosphate insecticides such as dichlorvos; aliphatic organothiophosphate insecticides such as malathion and terbufos; aliphatic amide organothiophosphate insecticides such as dimethoate; benzotriazine organothiophosphate insecticides such as azinphos-ethyl and azinphos-methyl; pyridine organothiophosphate insecticides such as chlorpyrifos and chlorpyrifos-methyl; pyrimidine organothiophosphate insecticides such as diazinon; phenyl organothiophosphate insecticides such as parathion and parathion-methyl; pyrethroid ester insecticides such as bifenthrin, cyfluthrin, beta-cyfluthrin, cyhalothrin, gamma-cyhalothrin, lambda-cyhalothrin, cypermethrin, alpha-cypermethrin, beta-cypermethrin, fenvalerate, permethrin; and the like.

Exemplary herbicides which can be used in the oil-in-water emulsion of the present invention include, but are not limited to: amide herbicides such as dimethenamid and dimethenamid-P; anilide herbicides such as propanil; chloroacetanilide herbicides such as acetochlor, alachlor, butachlor, metolachlor and S-metolachlor; cyclohexene oxime herbicides such as sethoxydim; dinitroaniline herbicides such as benfluralin, ethalfluralin, pendimethalin, and trifluralin; nitrile herbicides such asbromoxynil octanoate; phenoxyacetic herbicides such as 4-CPA, 2,4-D, 3,4-DA, MCPA, and MCPA-thioethyl; phenoxybutyric herbicides such as 4-CPB, 2,4-DB, 3,4-DB, and MCPB; phenoxypropionic herbicides such as cloprop, 4-CPP, dichlorprop, dichlorprop-P, 3,4-DP, fenoprop, mecoprop and mecoprop-P; aryloxyphenoxypropionic herbicides such as cyhalofop, fluazifop, fluazifop-P, haloxyfop, haloxyfop-R; pyridine herbicides such as aminopyralid, clopyralid, fluroxypyr, picloram, and triclopyr; triazole herbicides such as carfentrazone ethyl.

The herbicides can also generally be employed in combination with known herbicide safeners such as: benoxacor, cloquintocet, cyometrinil, daimuron, dichlormid, dicyclonon, dietholate, fenchlorazole, fenchlorazole-ethyl, fenclorim, flurazole, fluxofenim, furilazole, isoxadifen, isoxadifen-ethyl, mefenpyr, mefenpyr-diethyl, MG191, MON4660, R29148, mephenate, naphthalic anhydride, N-phenylsulfonylbenzoic acid amides and oxabetrinil.

Exemplary fungicides which can be used in the oil-in-water emulsion of the present invention include, but are not limited to, difenoconazole, dimethomorph, dinocap, diphenylamine, dodemorph, edifenphos, fenarimol, fenbuconazole, fenpropimorph, myclobutanil, oleic acid (fatty acids), propiconazole, tebuconazole.

It is understood by those skilled in the art that any combination of agriculturally active compounds with trifluralin may also be used in the oil-in-water emulsion of the present invention as long as a stable and effective emulsion is still obtained.

The amount of agriculturally active ingredient within the oil-in-water emulsion will vary depending upon the actual active ingredient, the application of the agriculturally active ingredient and the appropriate application levels which are well known to those skilled in the art. Typically, the total amount of agriculturally active ingredient within the oil-in-water emulsion will be from 1, generally from 5, preferably from 10, more preferably from 15 and most preferably from 20 to 55, generally to 40, preferably to 35 and most preferably to 30 weight percent based on the total weight of the oil-in-water emulsion.

In one embodiment of the present disclosure, a polymeric modifier may be included in the oil phase to retard crystallization of the agriculturally active ingredient. The polymeric modifier permits the use of agriculturally active ingredients that have melting points below 95°C. Examples of such agriculturally active ingredients that may be used in the oil-in-water emulsion composition of the present disclosure include alachlor, ametryn, anilofos, benfluralin, bifenox, bromoxynil octanoate, butralin, clodinafop-propargyl, clomazone, cycloxydim, cyhalofop-butyl, diclofop-methyl, dithiopyr, ethalfluralin, fenoxaprop-P-ethyl, fentrazamide, flufenacet, flumiclorac-pentyl, fluoroglycofen-ethyl, flurazole, fluorochloridone, fluroxypyr-methyl, haloxyfop-etotyl, haloxyfop-P, ioxynil octanoate, lactofen, mecoprop, mefenpyr-diethyl, metazachlor, napropamide, oxyfluorfen, pendimethalin, prometon, propanil, quizalofop-ethyl, quizalofop-P-ethyl, quizalofop-P-tefuryl, trifluralin, acephate, alpha-cypermethrin, amitraz, azinphos-ethyl, azinphos-methyl, beta-cyfluthrin, beta-cypermethrin, bifenthrin, butoxycarboxim, chlorpyrifos, chlorpyrifos-methyl, cyfluthrin, cypermethrin, dimethoate, esfenvalerate, fenobucarb, fenoxycarb, fenvalerate, indoxacarb, lambda-cyhalothrin, methamidophos, methonyl, methoxychlor, monocrotophos, nitrapyrin, parathion-methyl, permethrin, primicarb, propoxur, quinalphos, tetramethin, tolfenpyrad, benalaxyl, cyflufenamid, difenoconazole, dodemorph, fenoxanil, flusiazole, ipconazole, isoprothiolane, mepronil, metominostrobin, myclobutanil, penconazole, propiconazole, picoxystrobin, prochloraz, trifloxystrobin, triflumizole, etaconazole, pyraclostrobin, pyributicarb, and tolclofos-methyl.

Suitable polymeric modifiers for addition to the oil phase have very low water solubility and good solubility in a mixture of the active ingredient in a molten state with or without additional solvent present. Examples of suitable polymeric modifiers may include ethyl cellulose, for example, Ethocel 10 Std FP, Ethocel Std 4, Ethocel Std 7, Ethocel 45, Ethocel 100 FP, and Ethocel 300; Polyacrylate, Latex, Polycarbonate, Polyvinyl Acetate homopolymers and copolymers, Polyolefin, Polyurethane, Polyisobutylene, Polybutene, Vinyl polymers, Polyester, Polyether, and Polyacrylonitrile.

The aqueous phase is typically water, for example, deionized water. The aqueous phase may also contain other additives such as compounds that lower the freezing point, for example alcohols, e.g. isopropyl alcohol and propylene glycol; pH buffering agents, for example alkali phosphates such as sodium phosphate monobasic monohydrate, sodium phosphate dibasic; biocides, for example Proxel GXL; and antifoams, for example octamethylcyclotetrasiloxane (Antifoam A available from Dow Corning). Other additives and/or adjuvants can also be present in the aqueous phase as long as the stability of the oil-in-water emulsion is still maintained. Other additives also include water-soluble agriculturally active compounds.

Other additives and/or adjuvants can also be present within the microcapsules of the present invention, as long as the stability and activity of the microcapsule suspensions is still obtained. The microcapsules suspensions of the present invention may additionally contain adjuvant surface-active agents to enhance deposition, wetting and penetration of the agriculturally active ingredient onto the target site, e.g. crop, weed or organism. These adjuvant surface-active agents may optionally be employed as a component of the microcapsule suspensions in either the oil or water phase, or as a tank mix component; the use of and amount desired being well known by those skilled in the art. Suitable adjuvant surface-active agents include, but are not limited to, ethoxylated nonyl phenols, ethoxylated synthetic or natural alcohols, salts of the esters or sulphosuccinic acids, ethoxylated organosilicones, ethoxylated fatty amines and blends of surface-active agents with mineral or vegetable oils.

Another embodiment of the present invention is the use of the microcapsule suspensions in agricultural applications to control, prevent or eliminate unwanted living organisms, e.g. fungi, weeds, insects, bacteria or other microorganisms and pests. This would include its use for protection of a plant against attack by a phytopathogenic organism or the treatment of a plant already infested by a phytopathogenic organism, comprising applying the oil-in-water emulsion composition, to soil, a plant, a part of a plant, foliage, flowers, fruit, and/or seeds in a disease inhibiting and phytologically acceptable amount. The term "disease inhibiting and phytologically acceptable amount" refers to an amount of a compound that kills or inhibits the plant disease for which control is desired, but is not significantly toxic to the plant. The exact concentration of active compound required varies with the fungal disease to be controlled, the type of formulations employed, the method of application, the particular plant species, climate conditions as is well known in the art.

Additionally, the microcapsule suspensions of the present invention are useful for the control of insects or other pests, e.g. rodents. Therefore, the present invention also is directed to a method for inhibiting an insect or pest which comprises applying to a locus of the insect or pest a microcapsule suspension comprising an insect-inhibiting amount of an agriculturally active compound for such use. The "locus" of insects or pests is a term used herein to refer to the environment in which the insects or pests live or where their eggs are present, including the air surrounding them, the food they eat, or objects which they contact. For example, insects which eat or contact edible or ornamental plants can be controlled by applying the active compound to plant parts such as the seed, seedling, or cutting which is planted, the leaves, stems, fruits, grain, or roots, or to the soil in which the roots are growing. It is contemplated that the agriculturally active compounds and oil-in-water emulsions containing such, might also be useful to protect textiles, paper, stored grain, seeds, domesticated animals, buildings or human beings by applying an active compound to or near such objects. The term "inhibiting an insect or pest" refers to a decrease in the numbers of living insects or pests, or a decrease in the number of viable insect eggs. The extent of reduction accomplished by a compound depends, of course, upon the application rate of the compound, the particular compound used, and the target insect or pest species. At least an inactivating amount should be used. The terms "insect or pest-inactivating amount" are used to describe the amount which is sufficient to cause a measurable reduction in the treated insect or pest population, as is well known in the art.

The locus to which a compound or composition is applied can be any locus inhabited by an insect, mite or pest, for example, vegetable crops, fruit and nut trees, grape vines, ornamental plants, domesticated animals, the interior or exterior surfaces of buildings, and the soil around buildings.

Because of the unique ability of insect eggs to resist toxicant action, repeated applications may be desirable to control newly emerged larvae, as is true of other known insecticides and acaricides.

Additionally, the present invention relates to the use of microcapsule suspensions comprising agriculturally active compounds which are herbicides. The term herbicide is used herein to mean an active ingredient that kills, controls or otherwise adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation include emerging seedlings and established vegetation.

Herbicidal activity is exhibited when they are applied directly to the locus of the undesirable plant thereof at any stage of growth or before emergence of the weeds. The effect observed depends upon the plant species to be controlled, the stage of growth of the plant, the particle size of solid components, the environmental conditions at the time of use, the specific adjuvants and carriers employed, the soil type, and the like, as well as the amount of chemical applied. These and other factors can be adjusted as is known in the art to promote selective herbicidal action. Generally, it is preferred to apply such herbicides post emergence to relatively immature undesirable vegetation to achieve the maximum control of weeds.

Another specific aspect of the present invention is a method of preventing or controlling pests such as nematodes, mites, arthropods, rodents, termites, bacteria or other microorganisms, comprising applying to a locus where control or prevention is desired a composition of the present invention which comprises the appropriate active compound such as a nematocide, miticide, arthropodicide, rodenticide, termiticide or biocide.

The actual amount of agriculturally active compound to be applied to loci of disease, insects and mites, weeds or other pests is well known in the art and can readily be determined by those skilled in the art in view of the teachings above.

The following examples are provided to illustrate the present invention. The examples are not intended to limit the scope of the present invention and they should not be so interpreted. Amounts are in weight parts or weight percentages unless otherwise indicated.

### EXAMPLES

Referring now to Table 1. The following example is provided to further illustrate the invention and is not meant to be constructed as limiting. A microcapsule suspension was formed using the components listed in Table 1. Once formed, the particle sizes were measured using a Malvern Mastersizer.

The amount of AI (trifluralin) in the conventional microcapsule suspension formulation is limited to a maximum of 300 gai/l, while the maximum concentration of trifluralin in the inventive formulation is on the order of 30 percent higher. This likely is due to the fact that the convention formulation is formed at an AI to solvent ratio of 1:1 while the inventive formulation is formed at a much higher ratio of AI to solvent. Accordingly, the inventive formulations have more AI per microcapsule and can be applied more sparingly and, therefore, more cost effectively than the conventionally formed materials. Next the stability of the microcapsule suspension formed using the compounds in Table 1 were measured over time and under various storage conditions. These results showed that the particle size distribution of the particles was unchanged in both the interfacial polymerization process and during the mini-emulsion polymerization process. The resulting microcapsule suspension exhibited no detectable sign of trifluralin crystals after storage for two weeks at 5°C. Conversely, the conventionally formed microcapsule suspension made without the addition of 5% Methyl Acrylate shows significant trifluralin crystal formation and growth and was destabilized after being held at room temperature for only 3 days. Table 1: Components of 380 g/l Trifluralin microcapsule suspension with 5% Methyl Acrylate

| **Oil phase** | **Wt. %** |
|---|---|
| | |
| Trifluralin (herbicide 2,6-Dinitro-*N,N-*dipropyl-4-(trifluoromethyl)aniline) | 35.21 |
| Aromatic 200 (CAS # 064742-94-5) | 15.09 |
| Methyl Acrylate | 5.00 |
| PAPI 27 (a polymethylene polyphenyl polyisocyanate) available from DOW | 3.52 |
| Vazo 52® (2,2'-azo-bis (2,4 0.6 dimethyl valeronitrile), a polymerization initiator, available from DuPont | 0.18 |
| | |

| **Aqueous phase** | |
|---|---|
| | |
| Kraftsperse® 25M (a lignosulphonate dispersant) available from Westvaco Corp | 1.84 |
| Tergitol™ 15-S-7 (nonionic surfactant) available from Dow | 0.92 |
| Veegum (aluminum magnesium oxosilicon) | 0.18 |
| Kelzan S (glyoxal coated xanthan gum) avaiable from KELCO | 0.02 |
| Proxel GXL (a bacteria state that includes 1, 2-benzisothiazoline-3-one). | 0.09 |
| EDA (ethylenediamine) | 0.85 |
| Water (balanced ingredient) | |

The physical stability of the microcapsule formulation was also determined under accelerated storage condition i.e., 54°C, 5°C, and freeze/thaw cycle. After two weeks of storage under the afore-mentioned accelerated aging conditions, the formulation made in accordance with the inventive methods exhibited no signs of hard caking or solidification and the particle size of the microcapsules was unchanged, while the conventional formed microcapsules show significantly particle size increase due to crystal growth.

## Claims

1. A microcapsule, comprising:
a lipophilic polymer selected from the group consisting of polymeric acrylates, a lipophilic agriculturally active ingredient which includes trifluralin, at least one lipophilic solvent that dissolves the active ingredient, and a polymeric shell, wherein the polymeric shell encapsulates said lipophilic polymer and the agriculturally active ingredient.

2. The microcapsule according to claim 1, wherein the polymeric shell includes polyurea.

3. The microcapsule according to claim 1, wherein compounds used to form the polymeric shell include at least one compound selected from the group consisting of: diisocyanates or polyisocyanates, preferably polymethylene polyphenylisocyanate, and ethylene diamine.

4. A method of synthesizing a microcapsule, comprising the steps of:
creating a lipophilic phase, said lipophilic phase including a lipophilic polymer selected from the group consisting of polymeric acrylates, at least one agriculturally active ingredient which includes trifluralin, at least one lipophilic solvent and a lipophilic shell forming material;
emulsifying said lipophilic phase in the presence of water to form an oil-in-water emulsion; and
forming a microcapsule suspension via an interfacial polycondensation reaction including the step of adding a water soluble shell forming material to the oil-in-water emulsion.

5. A method of formulating an agriculturally active ingredient, comprising the steps of:
creating a lipophilic phase, said lipophilic phase including a lipophilic monomer selected from the group consisting of: methyl acrylate, ethyl acrylate, or butyl acrylate, a lipophilic initiator, a lipophilic shell forming material, an agriculturally active ingredient which includes trifluralin and at least one lipophilic solvent;
emulsifying said lipophilic phase in the presence of water to form an oil-in-water emulsion;
forming a microcapsule suspension including the step of adding a water soluble shell forming material to the oil-in-water emulsion; wherein the water soluble shell forming material reacts with the lipophilic shell forming material via an interfacial polycondensation reaction to form microcapsules; and
polymerizing the lipophilic polymer selected from the group consisting of polymeric acrylates.

6. The method according to claim 5, wherein the amount of agriculturally active ingredient in the microcapsule includes between 10 to 55, weight percent based on the total weight of the oil-in-water emulsion.

7. The method according to claim 4 or 5, wherein creating said lipophilic phase includes using a high shear mixer.

8. The method according to claim 4 or 5, wherein the emulsifying step includes in-line blending of said lipophilic phase and water.

9. The method according to claim 4 or 5, wherein the water soluble shell forming material include diamines, polyamines, water soluble diols and water soluble polyols and preferably is ethylene diamine.

10. The method according to claim 4 or 5, wherein the lipophilic shell forming material is selected from the group consisting of: diisocyanates or polyisocyanates, and preferably is polymethylene polyphenylisocyanate.

11. The method according to claim 5, wherein the oil soluble initiator is 2, 2-azobis (2,4-dimethylvaleronitrile).

12. The method according to claim 5, further including the steps of:
controlling the temperature of the lipophilic phase such that the temperature of the lipophilic phase and the temperature of emulsion is 5°C to 10°C below the initiator activation temperature of the lipophilic monomer; and
raising the temperature after the microcapsule forming step to at least the initiation activation temperature of the lipophilic monomer.

13. A method of controlling a plant pathogen, comprising the steps of:
providing a microcapsule suspension formed in accordance with claim 1; and contacting the microcapsule suspension with a surface adjacent to a plant pathogen.

## Patentansprüche

1. Eine Mikrokapsel umfassend:
ein lipophiles Polymer ausgewählt aus der Gruppe bestehend aus polymeren Acrylaten, einen lipophilen landwirtschaftlichen Wirkstoff, der Trifluralin beinhaltet, mindestens ein lipophiles Lösungsmittel, das den Wirkstoff löst, und eine polymere Hülle, wobei die polymere Hülle das lipophile Polymer und den landwirtschaftlichen Wirkstoff einschließt.

2. Die Mikrokapsel gemäß Anspruch 1, wobei die polymere Hülle Polyharnstoff enthält.

3. Die Mikrokapsel gemäß Anspruch 1, wobei Verbindungen, die zur Bildung der polymeren Hülle verwendet werden, mindestens eine Verbindung ausgewählt aus der Gruppe bestehend aus Diisocyanaten oder Polyisocyanaten, vorzugsweise Polymethylenpolyphenylisocyanat, und Ethylendiamin enthalten.

4. Ein Verfahren zur Herstellung einer Mikrokapsel, umfassend die Schritte des:
Bildens einer lipophilen Phase, wobei die lipophile Phase ein lipophiles Polymer, das aus der Gruppe bestehend aus polymeren Acrylaten ausgewählt ist, mindestens einen landwirtschaftlichen Wirkstoff, der Trifluralin enthält, mindestens ein lipophiles Lösungsmittel und ein lipophiles hüllebildendes Material enthält;
Emulgierens der lipophilen Phase in der Gegenwart von Wasser, um eine Öl-in-Wasser-Emulsion zu bilden; und
Bildens einer Mikrokapselsuspension mittels einer Grenzflächenpolykondensationsreaktion beinhaltend den Schritt des Hinzufügens eines wasserlöslichen hüllebildenden Materials zu der Öl-in-Wasser-Emulsion.

5. Ein Verfahren zur Formulierung eines landwirtschaftlichen Wirkstoffs, umfassend die Schritte des:
Bildens einer lipophilen Phase, wobei die lipophile Phase ein lipophiles Monomer ausgewählt aus der Gruppe bestehend aus Methylacrylat, Ethylacrylat oder Butylacrylat, einen lipophilen Initiator, ein lipophiles hüllebildendes Material, einen landwirtschaftlichen Wirkstoff, der Trifluralin enthält, und mindestens ein lipophiles Lösungsmittel enthält;
Emulgierens der lipophilen Phase in der Gegenwart von Wasser, um eine Öl-in-Wasser-Emulsion zu bilden;
Bildens einer Mikrokapselsuspension beinhaltend den Schritt des Hinzufügens eines wasserlöslichen hüllebildenden Materials zu der Öl-in-Wasser-Emulsion; wobei das wasserlösliche hüllebildende Material mit dem lipophilen hüllebildenden Material mittels einer Grenzflächenpolykondensationsreaktion reagiert, um Mikrokapseln zu bilden; und
Polymerisierens des lipophilen Polymers ausgewählt aus der Gruppe bestehend aus polymeren Acrylaten.

6. Das Verfahren gemäß Anspruch 5, wobei die Menge des landwirtschaftlichen Wirkstoffs in der Mikrokapsel zwischen 10 bis 55 Gew.-%, bezogen auf das Gesamtgewicht der Öl-in-Wasser-Emulsion, beinhaltet.

7. Das Verfahren gemäß Anspruch 4 oder 5, wobei das Bilden der lipophilen Phase die Verwendung eines Mischers mit hoher Scherkraft beinhaltet.

8. Das Verfahren gemäß Anspruch 4 oder 5, wobei der Emulgierungsschritt das Durchlaufmischen der lipophilen Phase und des Wassers beinhaltet.

9. Das Verfahren gemäß Anspruch 4 oder 5, wobei das wasserlösliche hüllebildende Material Diamine, Polyamine, wasserlösliche Diole und wasserlösliche Polyole beinhaltet und vorzugsweise Ethylendiamin ist.

10. Das Verfahren gemäß Anspruch 4 oder 5, wobei das lipophile hüllebildende Material aus der Gruppe bestehend aus Diisocyanaten oder Polyisocyanaten ausgewählt ist und vorzugsweise Polymethylenpolyphenylisocyanat ist.

11. Das Verfahren gemäß Anspruch 5, wobei der öllösliche Initiator 2,2-Azobis(2,4-dimethylvaleronitril) ist.

12. Das Verfahren gemäß Anspruch 5, weiterhin umfassend die Schritte des:
Steuerns der Temperatur der lipophilen Phase, so dass die Temperatur der lipophilen Phase und die Temperatur der Emulsion 5°C bis 10°C unterhalb der Initiationsaktivierungstemperatur des lipophilen Monomers ist; und
Erhöhens der Temperatur nach dem Schritt der Mikrokapselbildung auf mindestens die Initiationsaktivierungstemperatur des lipophilen Monomers.

13. Ein Verfahren zur Bekämpfung eines Pflanzenpathogens umfassend die Schritte des:
Bereitstellens einer Mikrokapselsuspension, die in Übereinstimmung mit Anspruch 1 gebildet wurde; und In-Kontakt-Bringen der Mikrokapselsuspension mit einer einem Pflanzenpathogen benachbarten Oberfläche.

## Revendications

1. Microcapsule, comprenant :
un polymère lipophile choisi dans l'ensemble constitué par les acrylates polymères, un composant lipophile actif en agriculture qui inclut la trifluraline, au moins un solvant lipophile qui dissout le composant actif, et une enveloppe polymère, dans laquelle l'enveloppe polymère encapsule ledit polymère lipophile et le composant actif en agriculture.

2. Microcapsule selon la revendication 1, dans laquelle l'enveloppe polymère inclut de la polyurée.

3. Microcapsule selon la revendication 1, dans laquelle les composés utilisés pour former l'enveloppe polymère incluent au moins un composé choisi dans l'ensemble constitué par : les diisocyanates ou polyisocyanates, de préférence le polyméthylène polyphénylisocyanate, et l'éthylènediamine.

4. Procédé de synthèse d'une microcapsule, comprenant les étapes consistant à :
créer une phase lipophile, ladite phase lipophile incluant un polymère lipophile choisi dans l'ensemble constitué par les acrylates polymères, au moins un composant actif en agriculture qui inclut la trifluraline, au moins un solvant lipophile et une substance lipophile formant l'enveloppe ;
émulsionner ladite phase lipophile en présence d'eau pour former une émulsion huile-dans-eau ; et
former une suspension de microcapsules via une réaction de polycondensation interfaciale, incluant l'étape consistant à ajouter à l'émulsion huile-dans-eau une substance hydrosoluble formant l'enveloppe.

5. Procédé de formulation d'un composant actif en agriculture, comprenant les étapes consistant à :
créer une phase lipophile, ladite phase lipophile incluant un monomère lipophile choisi dans l'ensemble constitué par : l'acrylate de méthyle l'acrylate d'éthyle et l'acrylate de butyle, un amorceur lipophile, une substance lipophile formant l'enveloppe, un composant actif en agriculture qui inclut la trifluraline et au moins un solvant lipophile et ;
émulsionner ladite phase lipophile en présence d'eau pour former une émulsion huile-dans-eau ; et
former une suspension de microcapsules, ce qui inclut l'étape consistant à ajouter à l'émulsion huile-dans-eau une substance hydrosoluble formant l'enveloppe ; la substance hydrosoluble formant l'enveloppe réagissant avec la substance lipophile formant l'enveloppe via une réaction de polycondensation interfaciale pour former des microcapsules ; et
faire polymériser le polymère lipophile choisi dans l'ensemble constitué par les acrylates polymères.

6. Procédé selon la revendication 5, dans lequel la quantité de composé actif en agriculture dans la microcapsule représente entre 10 et 55 pour cent en poids par rapport au poids total de l'émulsion huile-dans-eau.

7. Procédé selon la revendication 4 ou 5, dans lequel la création de ladite phase lipophile inclut l'utilisation d'un mélangeur à haut cisaillement.

8. Procédé selon la revendication 4 ou 5, dans lequel l'étape d'émulsification inclut le fait de mélanger en ligne ladite phase lipophile et de l'eau.

9. Procédé selon la revendication 4 ou 5, dans lequel la substance hydrosoluble formant l'enveloppe inclut des diamines, des polyamines, des diols hydrosolubles et polyols hydrosolubles et de préférence est l'éthylènediamine.

10. Procédé selon la revendication 4 ou 5, dans lequel la substance lipophile formant l'enveloppe est choisie dans l'ensemble constitué par : les diisocyanates et polyisocyanates, et de préférence est le polyméthylène polyphénylisocyanate.

11. Procédé selon la revendication 5, dans lequel l'amorceur liposoluble est le 2,2-azobis(2,4-diméthylvaléronitrile).

12. Procédé selon la revendication 5, incluant encore les étapes consistant à :
régler la température de la phase lipophile de manière que la température de la phase lipophile et la température de l'émulsion soient inférieures de 5 °C à 10 °C à la température d'activation de l'amorceur du monomère lipophile ; et
élever la température après l'étape consistant à former des microcapsules, jusqu'à au moins la température d'activation de l'amorçage du monomère lipophile.

13. Procédé de lutte contre un organisme phytopathogène, comprenant les étapes consistant à :
fournir une suspension de microcapsules formée selon la revendication 1 ; et mettre la suspension de microcapsules en contact avec une surface adjacente à un organisme phytopathogène.
